# EUROPEAN PATENT SPECIFICATION

(11) **EP 2 850 931 B1**
(45) Date of publication and mention of the grant of the patent: **26.04.2017**
(21) Application number: 14185479.4
(22) Date of filing: 19.09.2014
(51) Int. Cl.: A01D 34/64

(54) **Riding mower**
Aufsitzrasenmäher
Tondeuse autoportée

(30) Priority: 19.09.2013 JP 2013194027
(43) Date of publication of application: 25.03.2015
(73) Proprietor: ISEKI & CO., LTD., Matsuyama-shi Ehime-ken (JP)
(72) Inventor: Tsunashima, Taro, Ehime-ken (JP); Kitahara, Yusuke, Ehime-ken (JP); Okamoto, Suguru, Ehime-ken (JP); Goto, Renshi, Ehime-ken (JP)
(74) Representative: Nordmeyer, Philipp Werner

(56) References cited:
- JP-A- 2008 173 043
- JP-A- 2009 005 659

## Description

### BACKGROUND

### 1. Field of the Invention

The present invention relates to riding mowers for mowing grass, for example, in agricultural fields.

### 2. Description of the Related Art

There is known a riding mower including a mower for mowing grass that is disposed in a front portion of a vehicle body, a blower for blowing wind to transport the mown grass, and a collector for housing the mown grass (for example, European Patent No. 1142466).

The supporting structure of the riding mower of this type is achieved by a frame having a square bar shape, inside of which the collector at a default position is housed to some extent, and that is disposed horizontally between the axle of the front wheels and the axle of the rear wheels.

However, the present inventor found that the frame having a bar shape was required for the supporting structure of the conventional riding mower described above, so that the configuration of the supporting structure became complicated.

It is to be noted that in the supporting structure described above, it is difficult to perform easy maintenance operation.

JP 2008-173043 A describes a front mower-type riding lawn mower.

### SUMMARY

Considering the conventional problems described above, the object of the present invention is to provide a riding mower capable of achieving a robust supporting structure by a simple configuration.

According to a first aspect of the invention, there is provided a riding mower including: a mower arranged to mow grass and disposed in a front portion of a vehicle body;
a blower arranged to blow wind to transport the mown grass; a collector arranged to house the mown grass; an engine arranged to generate power and disposed posterior to the blower; a transmission case arranged to transmit the power generated by the engine to the blower and disposed between the blower and the engine; a front-side supporting frame arranged to support a front wheel; and a rear-side supporting frame arranged to support a rear wheel and to be separate from the front-side supporting frame; wherein the transmission case and the engine are coupled to each other; the front-side supporting frame is coupled to the transmission case and extends forward from the transmission case; and the rear-side supporting frame is coupled to the engine and extends backward from the engine.

According to this configuration, the transmission case and the engine are coupled to each other, so that the front-side supporting frame can support the transmission case and the front wheel while the rear-side supporting frame can support the engine and the rear wheel. Thus, a robust supporting structure can be achieved by a simple configuration.

According to a second aspect of the invention, in the riding mower according to the first aspect, the transmission case and the engine are coupled to each other via a coupling body.

According to a third aspect of the invention, the riding mower according to the first or second aspect, further includes a bonnet arranged to cover an upper portion of the engine, wherein: the front-side supporting frame is disposed on both right and left sides of the transmission case; and the rear-side supporting frame is disposed on both right and left sides of the engine.

According to this configuration, the bonnet covers the engine, so that it is easy to perform maintenance operation of the engine, which can enhance convenience.

According to a fourth aspect of the invention, the riding mower according to the third aspect, further includes a hydro static transmission pump disposed posterior to the engine, wherein: the hydro static transmission pump is disposed above an axle of the rear wheel; and a posterior portion of the bonnet is openable and closable in an up and down direction.

According to this configuration, the hydro static transmission pump is disposed above the axle of the rear wheel, so that it is easy to perform maintenance operation of the hydro static transmission pump, which can enhance convenience.

According to a fifthaspect of the invention, in the riding mower according to the fourth aspect, the rear-side supporting frame includes an inclined portion that rises backward, a rear portion that extends backward from the inclined portion above the axle of the rear wheel, and a front portion that extends forward from the inclined portion; the hydro static transmission pump is coupled to the rear portion of the rear-side supporting frame; and the engine is coupled to the front portion of the rear-side supporting frame.

According to this configuration, the hydro static transmission pump is supported by the rear portion of the rear-side supporting frame while the engine is supported by the front portion of the rear-side supporting frame, and thereby the engine and the hydro static transmission pump can be supported in a stable manner. Thus, a robust supporting structure can be achieved by a simple configuration.

The present invention can provide a riding mower capable of achieving a robust supporting structure by a simple configuration.

### BRIEF DESCRIPTION OF THE DRAWINGS

The present invention will become more fully understood from the detailed description given hereinbelow and the accompanying drawing which is given by way of illustration only, and thus is not limitative of the present invention and wherein:
FIG. 1 is a left-side view (No. 1) schematically showing a riding mower according to an embodiment of the present invention;
FIG. 2 is a plan view schematically showing the riding mower according to the embodiment of the present invention;
FIG. 3 is a back-side view schematically showing the riding mower according to the embodiment of the present invention;
FIG. 4 is a partial plan view (No. 1) schematically showing the riding mower according to the embodiment of the present invention;
FIG. 5 is a partial enlarged plan view schematically showing the riding mower according to the embodiment of the present invention;
FIG. 6 is a partial back-side view schematically showing the riding mower according to the embodiment of the present invention;
FIG. 7 is a partial enlarged plan view schematically showing a riding mower according to another embodiment of the present invention;
FIG. 8 is a partial left-side view schematically showing the riding mower according to the another embodiment of the present invention;
FIG. 9A is a partial pespective view schematically showing the riding mower according to the another embodiment of the present invention, and FIG. 9B is a partial enlarged perspective view schematically showing the riding mower according to the another embodiment of the present invention;
FIG. 10 is a partial enlarged perspective view schematically showing a riding mower according to yet another embodiment of the present invention;
FIG. 11 is a partial plan view (No. 2) schematically showing the riding mower according to the embodiment of the present invention; and
FIG. 12 is a left-side view (No. 2) schematically showing the riding mower according to the embodiment of the present invention.

### DETAILED DESCRIPTION OF THE INVENTION

Hereinafter, descriptions of embodiments according to the present invention will be provided with reference to the drawings.

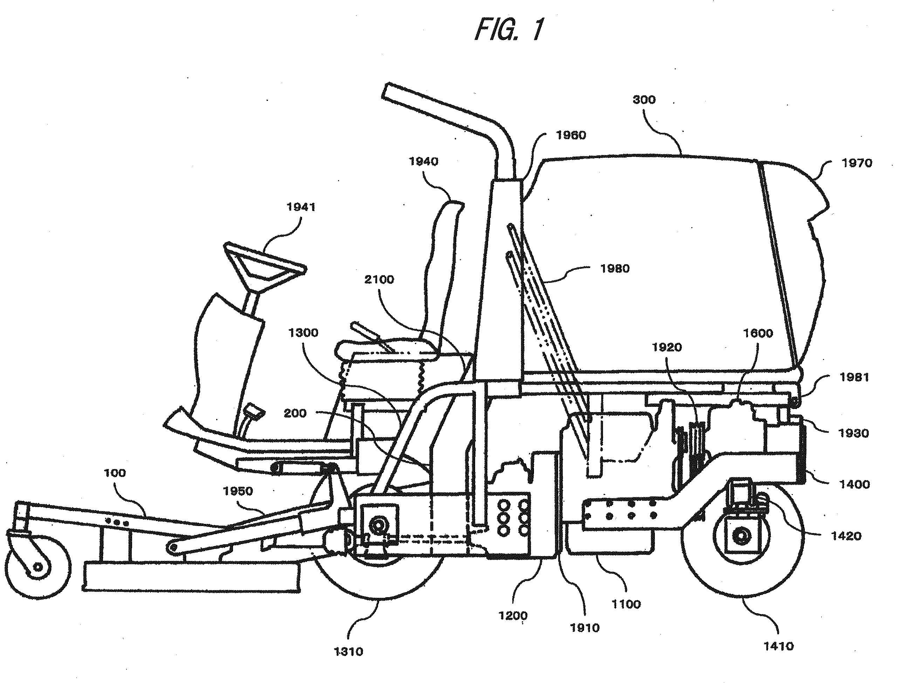

First of all, a specific description of the configuration and the operation of the riding mower according to the present embodiment will be provided mainly with reference to FIGs. 1 to 4.

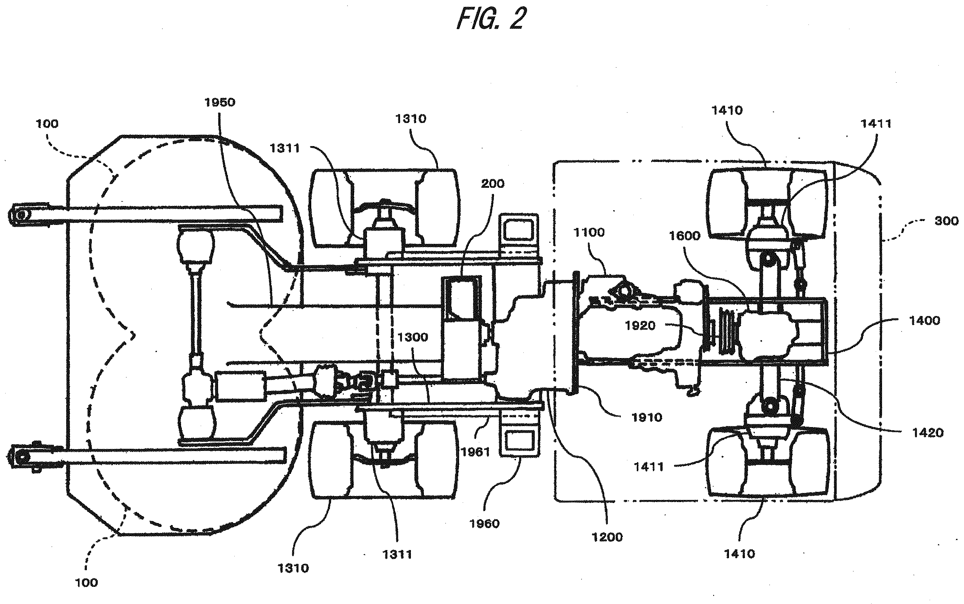

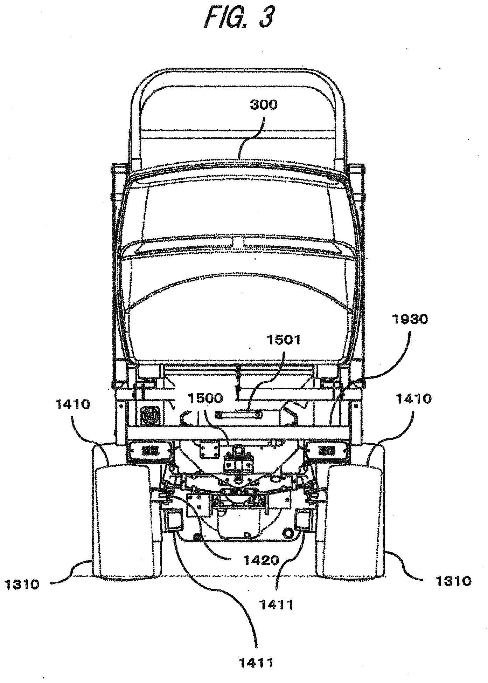

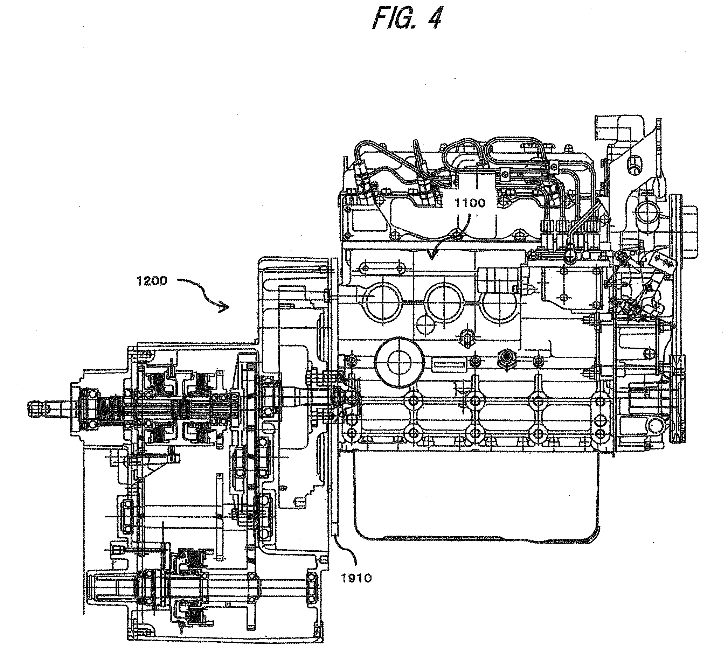

FIG. 1 is a left-side view (No. 1) schematically showing the riding mower according to the embodiment of the present invention. FIG. 2 is a plan view schematically showing the riding mower according to the embodiment of the present invention. FIG. 3 is a back-side view schematically showing the riding mower according to the embodiment of the present invention. FIG. 4 is a partial plan view (No. 1) schematically showing the riding mower according to the embodiment of the present invention.

The riding mower according to the present embodiment includes a mower 100, a blower 200, and a collector 300.

The mower 100 defines means for mowing grass, and is disposed in the front portion of the vehicle body.

The blower 200 defines means for blowing wind to transport the mown grass.

The collector 300 defines means for housing the mown grass.

A driver's seat 1940 where an operator performs the operation of the vehicle is provided at the front portion of the vehicle body.

A steering handle 1941 with which an operator performs the control of the vehicle is provided at the front end of the vehicle body.

The mower 100 communicates with the blower 200 via a mown-grass transport chute 1950 arranged to transport the mown grass.

Support rods 1960 are provided on both the right and left sides of the vehicle body.

The support rods 1960 are disposed posterior to the driver's seat 1940.

The support rods 1960 are coupled to the front end of a hoisting and lowering link mechanism 1980 arranged to perform dumping operation of the collector 300 that is associated with opening and closing of a collector door 1970.

A hoisting and lowering link mechanism frame member 1981 is provided to the hoisting and lowering link mechanism 1980 at the rear end, and passes behind the collector 300 in the right/left direction.

Next, a more specific description of the configuration and the operation of the riding mower according to the present embodiment will be provided.

The riding mower according to the present embodiment includes an engine 1100, a transmission case 1200, front-side supporting frames 1300, and rear-side supporting frames 1400.

The engine 1100 defines means for generating power, and is disposed posterior to the blower 200.

The transmission case 1200 is disposed between the blower 200 and the engine 1100, and defines means for transmitting the power generated by the engine 1100 to the blower 200.

The front-side supporting frames 1300 define means for supporting front wheels 1310.

The rear-side supporting frames 1400 define means for supporting rear wheels 1410.

The transmission case 1200 and the engine 1100 are coupled to each other.

The front-side supporting frames 1300 are coupled to the transmission case 1200, and extend forward from the transmission case 1200.

The rear-side supporting frames 1400 are coupled to the engine 1100, and extend backward from the engine 1100.

The front-side supporting frames 1300 are disposed on both the right and left sides of the transmission case 1200. The front portions of the rear-side supporting frames 1400 are mounted on both the right and left sides of a narrow width portion 1101 of the engine 1100.

An HST (Hydro Static transmission) pump 1600 arranged to drive drive motors 1311 of the front wheels 1310 and drive motors 1411 of the rear wheels 1410 is disposed posterior to the engine 1100. The HST pump 1600 is disposed above an axle 1420 of the rear wheels 1410.

A bonnet 1500 defines means for covering the engine 1100 and the HST pump 1600. The rear portion of the bonnet 1500 is movable rotatably about the front portion of the bonnet 1500 in the direction indicated with the arrow Z so that a space can be created in the up/down direction, and is configured openable and closable.

The transmission case 1200 functioning as a blower transmission case and the engine 1100 are coupled to each other in the back/forth direction. The front and rear portions of the transmission case 1200 and the engine 1100 are supported by the front-side supporting frames 1300 and the rear-side supporting frames 1400.

The front-side supporting frames 1300 are separated from the rear-side supporting frames 1400, so that it is important for the transmission case 1200 and the engine 1100 to be connected to each other.

In the present embodiment, the transmission case 1200 and the engine 1100 are connected to each other with the use of a coupling plate 1910.

Thus, a robust supporting structure can be achieved by a simple configuration.

The front-side supporting frames 1300 sandwich transmission case attaching plates 1210 provided on the right and left sides of the transmission case 1200. The rear-side supporting frames 1400 sandwich the right and left sides of the engine 1100.

The width in the right/left direction of the pair of the front-side supporting frames 1300 is made larger than the width in the right/left direction of the pair of rear-side supporting frames 1400. Thus, the front-side supporting frames 1300 can be coupled to the right and left sides of the transmission case 1200 having a relatively larger width in the right/left direction. The rear-side supporting frames 1400 can be coupled to the right and left sides of the HST pump 1600 having a relatively smaller width in the right/left direction.

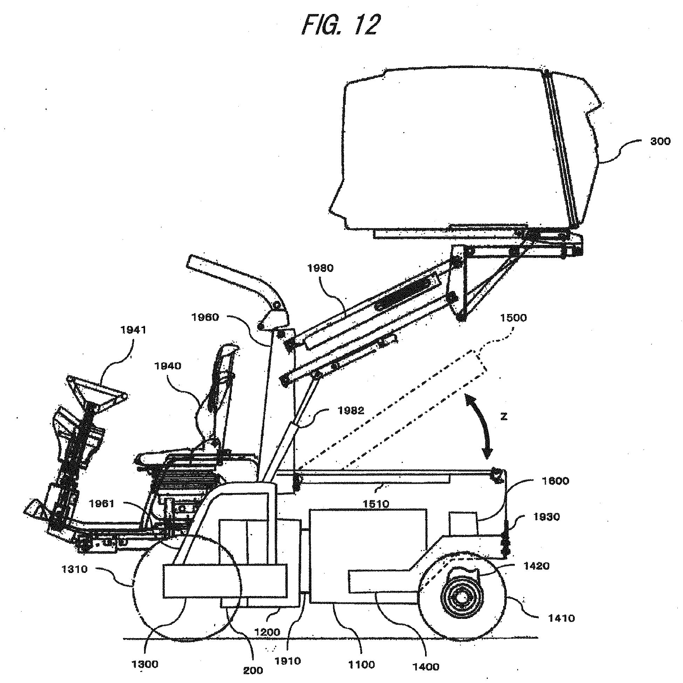

In opening the bonnet 1500, the hoisting and lowering link mechanism 1980 is hoisted with the use of a hoisting and lowering cylinder 1982 to hoist the collector 300 from its default position as shown in FIG. 12 that is a left-side view (No. 2) schematically showing the riding mower according to the embodiment of the present invention. Then, a handle 1501 provided to the bonnet 1500 at the rear portion is grasped to open the bonnet 1500. Then, the upper surfaces of the engine 1100 and the HST pump 1600 are exposed.

Thus, it is easy to perform maintenance operation of the engine 1100 and the HST pump 1600.

It is to be noted that while the configuration of the present embodiment is that only a part of the rear portion of the transmission case 1200 is exposed when the bonnet 1500 is opened, it is also possible to have a configuration that the entire upper surface of the transmission case 1200 is exposed.

The HST pump 1600 is disposed above the axle 1420 that functions as a rear axle of the rear wheels 1410.

Thus, it is easier to perform maintenance operation of the HST pump 1600 compared with a configuration that the HST pump 1600 is disposed below the axle 1420.

The rear portions of the rear-side supporting frames 1400 are inclined so as to rise backward and extend backward. The HST pump 1600 is coupled to the rear portions of the rear-side supporting frames 1400. The engine 1100 is coupled to the front portions of the rear-side supporting frames 1400.

The rear-side supporting frames 1400 sandwiching the right and left sides of the engine 1100 extend using the inclination that heads above the axle 1420, and support the right and left side portions of the HST pump 1600 with the flat portions provided close to the rear end portions of the rear-side supporting frames 1400.

Thus, the HST pump 1600 can be supported in a stable manner.

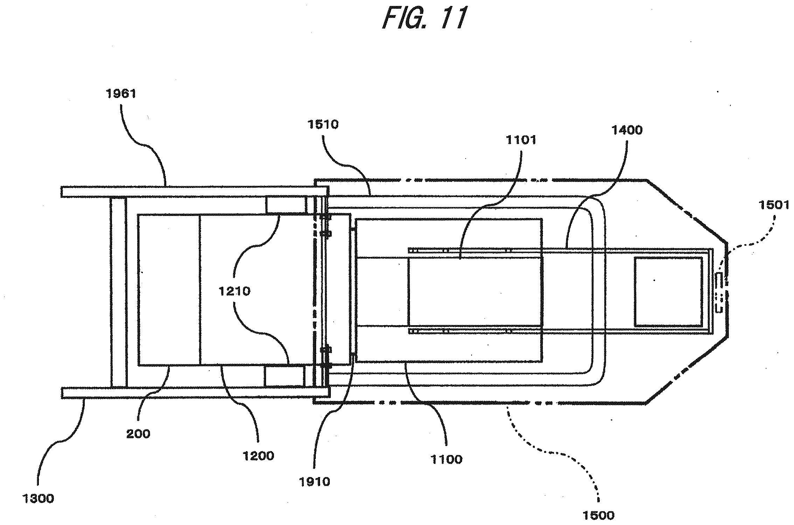

Hereinafter, a specific description of the frame configurations concerning frames such as the front-side supporting frames 1300 will be provided with reference to FIG. 11 that is a partial plan view (No. 2) schematically showing the riding mower according to the embodiment of the present invention.

Support rod-supporting frames 1961 having a trapezoidal frame shape in a side view are mounted from the top of the front-side supporting frames 1300. The support rod-supporting frames 1961 include right and left frames in pairs, and the upper portions of the right and left frames respectively support the lower portions of the right and left support rods 1960.

A bonnet supporting frame 1510 having a U-shape in a plan view is provided so as to head backward from the rear portions of the support rod-supporting frames 1961. The bonnet supporting frame is provided so as to receive the bonnet 1500, and the rear portion of the bonnet supporting frame passes above the rear-side supporting frames 1400.

Power transmission to the HST pump 1600 from the engine 1100 that is kept at a low position in order to lower the center of gravity is performed with the use of a power transmission belt 1920.

Thus, the above-described configuration by which maintenance operation is easy to perform can be achieved, and the capacity of mown grass of the collector 300 can be sufficiently ensured while the stability of the vehicle body can be ensured.

A frame member 1930 in the right/left direction arranged to support the hoisting and lowering link mechanism frame member 1981 is provided at the rear end portion of the rear-side supporting frames 1400.

Thus, even when the weight of the collector 300 housing the mown grass becomes large, the collector 300 can be supported in a stable manner.

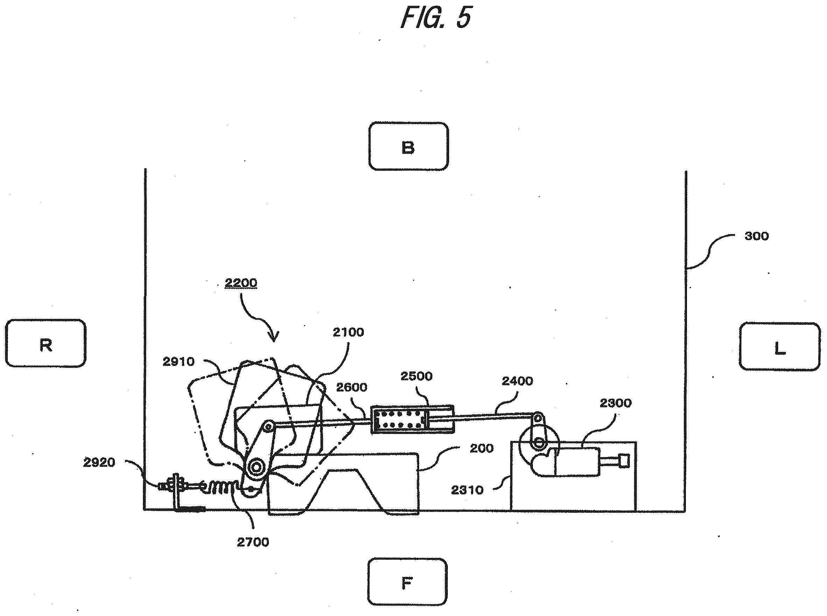

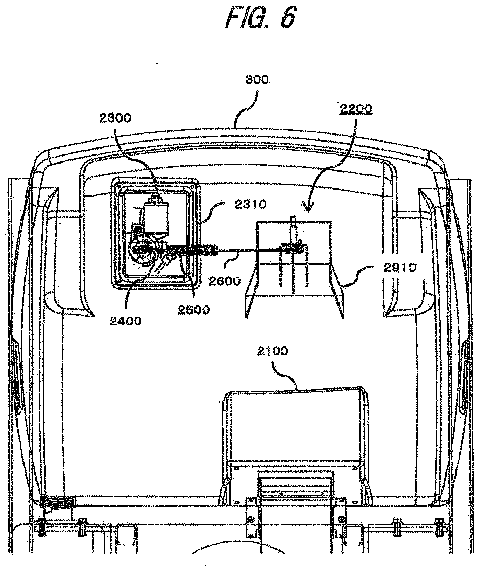

Next, a specific description of the configuration and the operation of the riding mower according to the present embodiment will be provided mainly with reference to FIGs. 5 and 6.

FIG. 5 is a partial enlarged plan view schematically showing the riding mower according to the embodiment of the present invention. FIG. 6 is a partial back-side view schematically showing the riding mower according to the embodiment of the present invention.

The riding mower according to the present embodiment further includes a chute 2100, an oscillating unit 2200, a motor 2300, a first rod 2400, an elastic body 2500, and a second rod 2600.

The chute 2100 defines means for discharging the grass transported by the blown air into the collector 300.

The oscillating unit 2200 defines means for changing the scattering direction of the discharged grass, and is disposed on the side of the distal end portion of the chute 2100.

The oscillating unit 2200 includes a discharge guiding plate 2910 that reciprocates in the right/left direction. The right-side portion and the left-side portion of the discharge guiding plate 2910 are bent such that the discharged mown grass can be smoothly guided.

Thus, the mown grass accumulates evenly throughout inside the collector 300, so that a filling rate of the collector 300 can be increased.

The motor 2300 defines means for generating power to make the oscillating unit 2200 perform oscillation.

The first rod 2400 defines means coupled to the motor 2300.

The elastic body 2500 defines means coupled to the first rod 2400.

The second rod 2600 defines means coupled between the elastic body 2500 and the oscillating unit 2200.

For example, because when a grass collecting unit of the collector 300 becomes full of grass, the oscillating unit 2200 is hindered from oscillating because of a collision with the grass to be likely to be locked, the elastic body 2500 functioning as a safety apparatus for preventing lockup of the motor 2300 accompanied with the locking of the oscillating unit 2200 is disposed at the link portion between the first rod 2400 and the second rod 2600.

Thus, the simple configuration using the elastic body 2500 functioning as a motor lockup-preventing link mechanism arranged to prevent lockup of the motor 2300 can prevent occurrence of a breakage of the motor 2300 accompanied with the locking of the oscillating unit 2200 and a breakdown such as a blowout.

A motor stay 2310 defines means for having the motor 2300 built-in in order to mount the motor 2300 on the collector 300 in an attachable and detachable manner.

The motor stay 2310 functioning as a motor case arranged to separate the motor 2300 from the grass collecting unit of the collector 300 is mounted, for example, on a motor stay opening that functions also as a maintenance opening for maintenance operation of the collector 300 by being screwed at the four corners from the inside of the collector 300.

Thus, the motor 2300 built in the motor stay 2310 is not in direct contact with grass taking on moisture, so that it is easy to perform maintenance operation of the motor 2300.

A spring 2700 defines means mounted on the oscillating unit 2200. The distal end portion of the chute 2100 is disposed closer to either one side of the right and left sides of the collector 300. The time when the grass scattering direction is changed into the side opposite to the one side is set longer than the time when the grass scattering direction is changed into the one side by using an elastic force of the spring 2700 against the oscillating unit 2200.

When the chute 2100 functioning as a discharge tube for discharging the mown grass to the inside of the collector 300 is disposed, for example, closer to the right side of the collector 300, the grass is likely to accumulate unevenly to the right side inside the collector 300. Thus, the spring 2700 functioning as a resistant spring is mounted via a resistance adjusting bolt 2920 provided on an inner wall of the collector 300 such that the length of the spring 2700 becomes shorter than the natural length at a right-side oscillation position.

Thus, the mown grass accumulates evenly throughout inside the collector 300, so that a filling rate of the collector 300 can be increased.

It is to be noted that a diffusion fan or the like arranged to promote discharge of the grass may be additionally provided close to the distal end portion of the chute 2100.

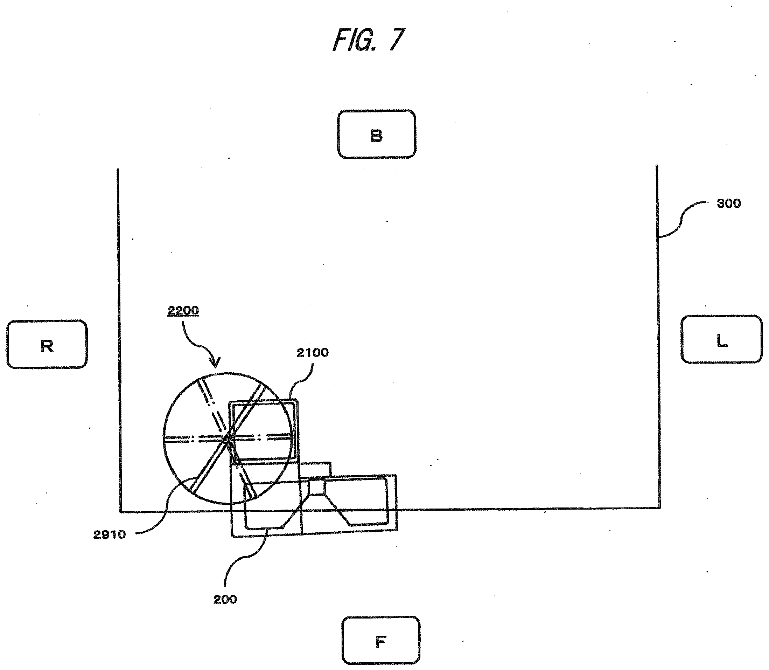

In addition, the discharge guiding plate 2910 that the oscillating unit 2200 includes may be rotated around the vertical axis instead of reciprocating in the right/left direction as shown in FIG. 7.

FIG. 7 is a partial enlarged plan view schematically showing a riding mower according to another embodiment of the present invention.

A mechanism for rotational motion is often simpler than a mechanism for reciprocating motion, so that simplification of the apparatus configuration and/or cutting of power consumption can be achieved.

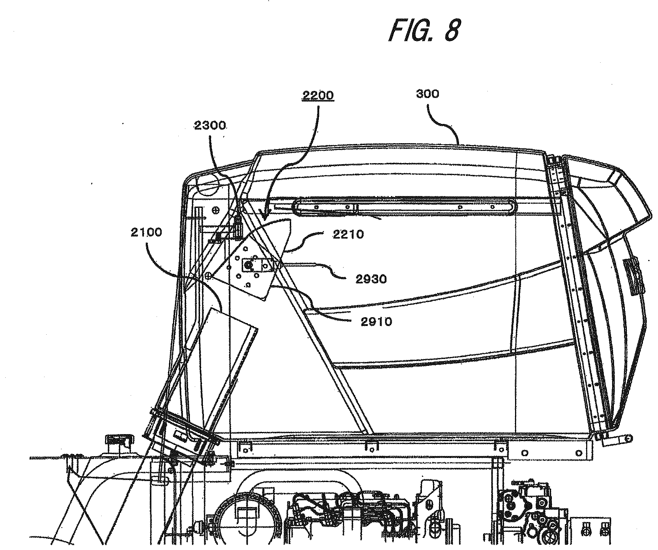

In addition, the oscillating unit 2200 may have a box shape as shown in FIG. 8.

FIG. 8 is a partial left-side view schematically showing the riding mower according to the another embodiment of the present invention.

The distal end portion of the chute 2100 is disposed closer to either one side of the right and left sides of the collector 300. The oscillating unit 2200 has a box shape, and has a notch 2210 formed on the side surface opposite to the one side of the box shape.

When the chute 2100 functioning as a discharge tube for discharging the mown grass to the inside of the collector 300 is disposed, for example, closer to the right side of the collector 300, the grass is likely to accumulate unevenly to the right side inside the collector 300. Thus, the oscillating unit 2200 having a box shape is notched on the left side.

Thus, the mown grass accumulates evenly throughout inside the collector 300, so that a filling rate of the collector 300 can be increased.

It is sure that when the oscillating unit 2200 having a box shape has the notch 2210, the grass accumulates evenly to some extent throughout inside the collector 300 even if oscillation is not performed, so that not performing oscillation or performing oscillation with decreased frequency can achieve simplification of the apparatus configuration and/or cutting of power consumption.

It is desirable that this box shape specifically defines a shape such that a full-capacity sensor 2930 arranged to detect that the grass collecting unit of the collector 300 becomes full of grass is easily mounted.

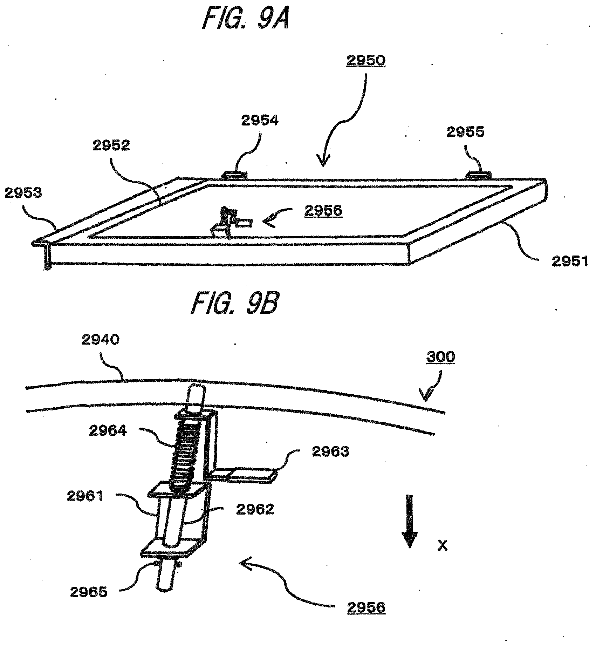

In addition, a partition 2950 arranged to separate the grass collecting unit located below from an air discharge unit located above and functioning as an air discharge passage on the side of a collector ceiling plate 2940 may be provided horizontally inside the collector 300 as shown in FIGs. 9A and FIG. 9B.

FIG. 9A is a partial pespective view schematically showing the riding mower according to the another embodiment of the present invention, and FIG. 9B is a partial enlarged perspective view schematically showing the riding mower according to the another embodiment of the present invention.

The partition 2950 includes a partition frame body 2951, a partition mesh unit 2952, a collector fitting unit 2953, and stoppers 2954, 2955 and 2956.

The partition frame body 2951 defines means for supporting the partition mesh unit 2952, and has a frame shape.

The partition mesh unit 2952 defines means supported by the partition frame body 2951, and is made of a breathable material.

The collector fitting unit 2953 defines means for fitting in a groove or the like provided to at least either one side of the right and left sides of the inner wall of the collector 300.

Having this configuration, the partition 2950 can be mounted on the collector 300 in an attachable and detachable manner, so that it is easy to perform maintenance operation such as cleaning.

The stoppers 2954 and 2955 are in contact with the collector ceiling plate 2940, and define means for limiting upward movement.

The stopper 2956 includes a partition frame body fitting unit 2961, a lock bar 2962, a lock lever 2963, a lock spring 2964, and a roll pin 2965, and defines means for limiting backward movement.

The partition frame body fitting unit 2961 defines means for fitting with the partition frame body 2951 when the partition 2950 is pulled in the collector 300.

The lock bar 2962 is mounted on the partition frame body fitting unit 2961 through two through-holes in the up/down direction that are provided to the partition frame body fitting unit 2961, and defines means of which the upper end portion is inserted into a hole provided to the collector ceiling plate 2940 at the time of locking.

The lock lever 2963 is fixed to the lock bar 2962 at a position close to the upper end portion, and defines means for sliding the lock bar 2962 in the down direction at the time of unlocking by an operator's pushing down of the lock bar 2962 in the down direction indicated with the arrow X.

The lock spring 2964 is wound on the lock bar 2962 between the lock lever 2963 and the partition frame body fitting unit 2961, and defines means compressed so as to have a length shorter than the natural length at the time of unlocking.

The roll pin 2965 is inserted into the lock bar 2962 at a position close to the lower end portion, and defines means for preventing the lock bar 2962 mounted on the partition frame body fitting unit 2961 from falling off above the lock bar 2962.

The partition 2950 mounted on the collector 300 can be limited from moving upward and downward by this configuration. Thus, the partition 2950 does not drop off the collector 300 even during dumping operation.

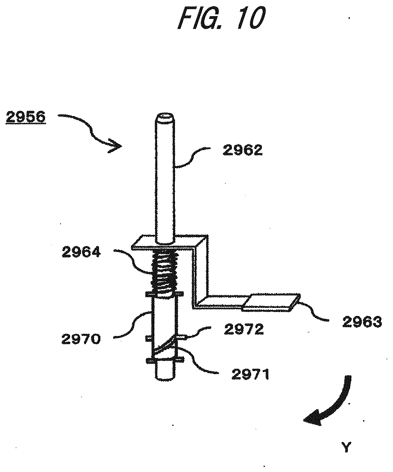

In addition, a configuration such that the lock lever 2963 is pulled in the frontward direction indicated with the arrow Y in FIG. 10 instead of being pulled down at the time of unlocking may be possible.

FIG. 10 is a partial enlarged perspective view schematically showing a riding mower according to yet another embodiment of the present invention

The lock bar 2962 passes in the up/down direction through a pipe 2970 that is fixed to the partition frame body 2951 with upper and lower fixing pins. When the lock bar 2962 is pulled in the frontward direction, both the end portions of a lock bar pin 2972 inserted into the lock bar 2962 are guided by a double-spiral pipe flute 2971 formed on the pipe 2970 to move downward, which slides the lock bar 2962 downward.

The operation of pulling the lock bar 2962 in the frontward direction is often easier for many operators than the operation of pulling down the lock bar 2962. Thus, operability can be improved.

The riding mower according to the present invention is capable of achieving a robust supporting structure by a simple configuration, and is useful in being used as a riding mower for mowing grass, for example, in agricultural fields.

## Claims

1. A riding mower comprising:
a mower (100) arranged to mow grass and disposed in a front portion of a vehicle body;
a blower (200) arranged to blow wind to transport the mown grass;
a collector (300) arranged to house the mown grass;
an engine (1100) arranged to generate power and disposed posterior to the blower (200);
a transmission case (1200) arranged to transmit the power generated by the engine (1100) to the blower (200) and disposed between the blower (200) and the engine (1100);
a front-side supporting frame (1300) arranged to support a front wheel (1310); and
a rear-side supporting frame (1400) arranged to support a rear wheel (1410); wherein the transmission case (1200) and the engine (1100) are coupled to each other;
the front-side supporting frame (1300) is coupled to the transmission case (1200) and extends forward from the transmission case (1200); and
the rear-side supporting frame (1400) is coupled to the engine (1100) and extends backward from the engine (1100),
**characterised in that** the rear-side supporting frame (1400) is arranged to be separate from the front-side supporting frame (1300).

2. The riding mower according to claim 1, wherein
the transmission case (1200) and the engine (1100) are coupled to each other via a coupling body.

3. The riding mower according to claim 1 or 2, further comprising
a bonnet (1500) arranged to cover an upper portion of the engine (1100), wherein:
the front-side supporting frame (1300) is disposed on both right and left sides of the transmission case (1200); and
the rear-side supporting frame (1400) is disposed on both right and left sides of the engine (1100).

4. The riding mower according to claim 3, further comprising
a hydro static transmission pump (1600) disposed posterior to the engine (1100), wherein:
the hydro static transmission pump (1600) is disposed above an axle (1420) of the rear wheel (1410); and
a posterior portion of the bonnet (1500) is openable and closable in an up and down direction.

5. The riding mower according to claim 4, wherein:
the rear-side supporting frame (1400) comprises an inclined portion that rises backward, a rear portion that extends backward from the inclined portion above the axle of the rear wheel (1410), and a front portion that extends forward from the inclined portion;
the hydro static transmission pump (1600) is coupled to the rear portion of the rear-side supporting frame (1400); and
the engine (1100) is coupled to the front portion of the rear-side supporting frame (1400).

## Patentansprüche

1. Aufsitzmäher, umfassend:
einen Mäher (100), der eingerichtet ist, um Gras zu mähen und in einem vorderen Bereich eines Fahrzeugkörpers angeordnet ist;
ein Gebläse (200), das eingerichtet ist, um Wind zu blasen, um das gemähte Gras zu transportieren;
einen Sammler (300), der eingerichtet ist, um das gemähte Gras aufzunehmen;
einen Motor (1100), der eingerichtet ist, um Leistung zu generieren und hinter dem Gebläse (200) angeordnet ist;
ein Getriebegehäuse (1200), das eingerichtet ist, um die von dem Motor (1100) generierte Leistung auf das Gebläse (200) zu übertragen und zwischen dem Gebläse (200) und dem Motor (1100) angeordnet ist;
einen vorderseitigen Tragrahmen (1300), der eingerichtet ist, um ein Vorderrad (1310) zu tragen; und
einen rückseitigen Tragrahmen (1400), der angeordnet ist, um ein Hinterrad (1410) zu tragen; wobei
das Getriebegehäuse (1200) und der Motor (1100) miteinander gekoppelt sind;
der vorderseitige Tragrahmen (1300) mit dem Getriebegehäuse (1200) gekoppelt ist und sich von dem Getriebegehäuse (1200) nach vorne erstreckt; und
der rückseitige Tragrahmen (1400) mit dem Motor (1100) gekoppelt ist und sich von dem Motor (1100) nach hinten erstreckt,
**dadurch gekennzeichnet, dass** der rückseitige Tragrahmen (1400) eingerichtet ist, um von dem vorderseitigen Tragrahmen (1300) separat zu sein.

2. Aufsitzmäher nach Anspruch 1, wobei das Getriebegehäuse (1200) und der Motor (1100) über einen Kopplungskörper mit einander gekoppelt sind.

3. Aufsitzmäher nach Anspruch 1 oder 2, ferner umfassend
eine Haube (1500), die eingerichtet ist, um einen oberen Bereich des Motors (1100) abzudecken, wobei:
der vorderseitige Tragrahmen (1300) sowohl auf der rechten als auch auf der linken Seite des Getriebegehäuses (1200) angeordnet ist; und
der rückseitige Tragrahmen (1400) sowohl auf der rechten als auch auf der linken Seite des Motors (1100) angeordnet ist.

4. Aufsitzmäher nach Anspruch 3, ferner umfassend
eine hydrostatische Getriebepumpe (1600), die hinter dem Motor (1100) angeordnet ist, wobei:
die hydrostatische Getriebepumpe (1600) oberhalb einer Achse (1420) des Hinterrads (1410) angeordnet ist; und
ein hinterer Bereich der Haube (1500) in einer Herauf- und Herunterrichtung öffenbar und schließbar ist.

5. Aufsitzmäher nach Anspruch 4, wobei
der rückseitige Tragrahmen (1400) einen geneigten Bereich, der sich nach hinten erhöht, einen hinteren Bereich, der sich von dem geneigten Bereich über der Achse des Hinterrads (1410) nach hinten erstreckt, und einen vorderen Bereich, der sich von dem geneigten Bereich nach vorne erstreckt, umfasst;
die hydrostatische Getriebepumpe (1600) mit dem hinteren Bereich des rückseitigen Tragrahmens (1400) gekoppelt ist; und
der Motor (1100) mit dem vorderen Bereich des rückseitigen Tragrahmens (1400) gekoppelt ist.

## Revendications

1. Tondeuse autoportée comprenant :
une tondeuse (100) agencée pour tondre l'herbe et disposée dans une partie avant d'une carrosserie de véhicule ;
un ventilateur (200) agencé pour souffler de l'air pour transporter l'herbe tondue ;
un collecteur (300) agencé pour loger l'herbe tondue ;
un moteur (1100) agencé pour produire de la puissance et disposé postérieurement au ventilateur (200) ;
un boîtier de transmission (1200) agencé pour transmettre la puissance produite par le moteur (1100) au ventilateur (200) et disposé entre le ventilateur (200) et le moteur (1100) ;
un châssis de support avant (1300) agencé pour supporter une roue avant (1310) ; et
un châssis de support arrière (1400) agencé pour supporter une roue arrière (1410) ;
dans laquelle
le boîtier de transmission (1200) et le moteur (1100) sont couplés l'un à l'autre ;
le châssis de support avant (1300) est couplé au boîtier de transmission (1200) et s'étend vers l'avant du boîtier de transmission (1200) ; et
le châssis de support arrière (1400) est couplé au moteur (1100) et s'étend vers l'arrière du moteur (1100),
**caractérisé en ce que** le châssis de support arrière (1400) est agencé pour être séparé du châssis de support avant (1300).

2. Tondeuse autoportée selon la revendication 1, dans laquelle
le boîtier de transmission (1200) et le moteur (1100) sont couplés l'un à l'autre par l'intermédiaire d'un corps d'accouplement.

3. Tondeuse autoportée selon la revendication 1 ou 2, comprenant en outre
un capot (1500) agencé pour couvrir une partie supérieure du moteur (1100), dans lequel :
le châssis de support avant (1300) est disposé sur les côtés tant de droite que de gauche du boîtier de transmission (1200) ; et
le châssis de support arrière (1400) est disposé sur les côtés tant de droite que de gauche du moteur (1100).

4. Tondeuse autoportée selon la revendication 3, comprenant en outre une pompe de transmission hydrostatique (1600) disposée postérieurement au moteur (1100), dans laquelle :
la pompe de transmission hydrostatique (1600) est disposée au-dessus d'un essieu (1420) de la roue arrière (1410) ; et
une partie postérieure du capot (1500) peut être ouverte et fermée dans un sens vers le haut et vers le bas.

5. Tondeuse autoportée selon la revendication 4, dans laquelle :
le châssis de support arrière (1400) comprend une partie inclinée qui s'élève vers l'arrière, une partie arrière qui s'étend vers l'arrière à partir de la partie inclinée au-dessus de l'essieu de la roue arrière (1410), et une partie avant qui s'étend vers l'avant à partir de la partie inclinée ;
la pompe de transmission hydrostatique (1600) est couplée à la partie arrière du châssis de support arrière (1400) ; et
le moteur (1100) est couplé à la partie avant du châssis de support arrière (1400).
